# EUROPEAN PATENT APPLICATION

(11) **EP 4 835 463 A1**
(43) Date of publication of application: **04.11.2026**
(21) Application number: 24912177.3
(22) Date of filing: 27.11.2024
(51) Int. Cl.: G01N 27/416, G01N 27/28, G01N 27/30, H01M 8/02, H01M 8/04, H01M 8/0444

(54) **ION ANALYSIS DEVICE AND ION ANALYSIS METHOD**

(30) Priority: 25.12.2023 JP 2023217631
(71) Applicant: Horiba Advanced Techno, Co., Ltd., Kyoto-shi, Kyoto 6018551 (JP); HORIBA, Ltd., Kyoto-shi Kyoto 601-8510 (JP)
(72) Inventor: MIYAMURA, Kazuhiro, Kyoto-shi, Kyoto 601-8551 (JP); KIDO, Masanori, Kyoto-shi, Kyoto 601-8551 (JP); OKADA, Yoichi, Kyoto-shi, Kyoto 601-8510 (JP); YAMASHITA, Tsubasa, Kyoto-shi, Kyoto 601-8510 (JP)
(74) Representative: Müller Hoffmann & Partner
(86) International application number: PCT/JP2024/041993
(87) International publication number: WO 2025/142287

(57) **Abstract**

There is provided an ion analysis device that is able to perform a measurement using an even smaller quantity of sample solution than is used conventionally. This ion analysis device is equipped with a measurement electrode that is provided with a response portion that responds to ions, a reference electrode that is provided with a liquid junction, a measurement flow path in the interior of which are disposed the response portion and the liquid junction, and a calculation unit that calculates an ion concentration based on a potential difference between the measurement electrode and the reference electrode, wherein a hydrophilic portion that connects the response portion to the liquid junction is further provided inside the measurement flow path.

## Description

### [Technical Field]

The present invention relates to an ion analysis device that measures an ion concentration contained in a sample solution, and to an ion analysis method.

### [Technical Background]

In an ion analysis device that is provided with a measurement electrode and a reference electrode, and that measures an ion concentration based on a potential difference that is generated between the measurement electrode and the reference electrode, because it is necessary to perform the measurement in a state in which both the measurement electrode and the reference electrode are in contact with the sample solution that is serving as the measurement target, in a case in which the quantity of sample solution that can be obtained each time is only very small, it has been necessary to make various improvisations such as either waiting until a certain quantity of the sample solution has accumulated and then measuring the ion concentration, or diluting the sample solution so as to increase the volume of the sample solution and then measuring the ion concentration.

However, in a case in which a user has decided to wait until a certain quantity of the sample solution has accumulated, then, for example, in a case in which the objective is to detect a change in the state of a hydrogen reactor such as a fuel cell or the like by observing a change in the concentration of ion components contained in a gas discharged from that hydrogen reactor, there is a concern that this change in the state of the hydrogen reactor will not be immediately reflected in the measurement result of the ion concentration. Even if a pH measurement device for measuring trace quantities such as is described in Patent Document 1 is used, because the measurement requires that the interior of the flow path be filled with the sample solution so that both the response film of the measurement electrode and the liquid junction of the reference electrode are in contact with the sample solution, a supply of at least 500 µm/min of sample solution is needed.

On the other hand, if a method of diluting the sample solution is adopted, then the problem arises that the smaller the quantity of sample solution, the greater the need becomes for a dilution mechanism that is able to dilute the sample solution to high level of accuracy.

### [Documents of the Prior Art]

### [Patent Documents]

[Patent Document 1] Japanese Patent No. 6804956

### [Disclosure of the Invention]

### [Problems to be Solved by the Invention]

The present invention was therefore conceived in order to solve the above-described problems, and it is an object thereof to provide an ion analysis device that is capable of taking a measurement using a smaller quantity of sample solution than is the case conventionally.

### [Means for Solving the Problem]

Namely, an ion analysis device according to the present invention is an ion analysis device that is provided with a measurement electrode that is provided with a response portion that responds to ions, a reference electrode that is provided with a liquid junction, a measurement flow path in the interior of which are disposed the response portion and the liquid junction, and a calculation unit that calculates an ion concentration based on a potential difference between the measurement electrode and the reference electrode, wherein this ion analysis device is characterized in that a hydrophilic portion that connects the response portion to the liquid junction is additionally provided inside the measurement flow path.

According to an ion analysis device that is configured in this manner, because a hydrophilic portion that connects the response portion to the liquid junction is also provided inside the measurement flow path, even in a case in which, for example, the quantity of sample solution flowing through the measurement flow path is extremely small so that the measurement flow path is not filled, the hydrophilic portion will still connect the response portion to the liquid junction. As a result, the sample solution is able to spread out via the surface of this hydrophilic portion so as to come into contact with the response portion and the liquid junction, resulting in the response portion and the liquid junction being electrically connected by the sample solution, thereby making it possible for a measurement to be taken.

It is preferable that the response portion and the liquid junction are arranged facing each other on either side of the measurement flow path as this enables the distance between the response portion and the liquid junction to be made as short as possible.

A specific embodiment of the present invention is a configuration in which the response portion and the liquid junction are arranged facing each other on either side of the above-mentioned measurement flow path, and in such a way that the liquid junction is positioned on the downstream side of the response portion.

It is also preferable that a contact angle of a surface of the hydrophilic portion is 90° or less.

A specific embodiment of the hydrophilic portion is a configuration in which the hydrophilic portion is, for example, a hydrophilic surface layer that is provided on an internal wall of the measurement flow path, or a hydrophilic component that is disposed inside the measurement flow path.

It is preferable that a cooling unit that cools the measurement flow path be additionally provided on the measurement flow path on an upstream side from the response portion as this enables water vapor flowing through the interior of the measurement flow path to be liquefied, and enables the liquid quantity of the sample solution to be increased as much as possible so that measurement accuracy can be improved even more.

It is also preferable that a fixing mechanism that employs a screw to secure the measurement electrode and/or the reference electrode to the measurement flow path be additionally provided as this makes it possible for the aforementioned measurement electrode and reference electrode to be stably fixed to the measurement path even in a case in which pressure is generated within the measurement flow path.

### [Effects of the Invention]

As has been described above, according to the present invention it is possible to measure an ion concentration contained in a sample solution even in a case in which an even smaller quantity of sample solution is supplied compared to the conventional technology. As a result, it is possible to analyze changes in an ion concentration in a sample solution in real time and more responsively than when taking a measurement after first having to accumulate the sample solution. Moreover, because it is not necessary to dilute the sample solution, it is possible to measure the ion concentration in the sample solution accurately using the simplest possible configuration.

### [Brief Description of the Drawings]

[FIG. 1] FIG. 1 is an overall schematic view showing an ion analysis device according to an embodiment of the present invention.
[FIG. 2] FIG. 2 is a schematic view showing an enlargement of a portion of the ion analysis device according to the present embodiment.
[FIG. 3] FIG. 3 is a schematic view showing an enlargement of a portion of the ion analysis device according to the present embodiment.
[FIG. 4] FIG. 4 is a graph showing an example of results obtained from an ion analysis performed using the ion analysis device according to the present embodiment.
[FIG. 5] FIG. 5 is a graph showing an example of results obtained from an ion analysis performed using the ion analysis device according to the present embodiment.
[FIG. 6] FIG. 6 is a schematic view showing a fuel cell evaluation system that uses the ion analysis device according to the present embodiment.
[FIG. 7] FIG. 7 is a schematic view showing a fuel cell evaluation system according to a variant embodiment.
[FIG. 8] FIG. 8 is a schematic view showing a fuel cell evaluation system according to a variant embodiment.
[FIG. 9] FIG. 9 is a schematic view showing a fuel cell evaluation system according to a variant embodiment.

### [Best Embodiments for Implementing the Invention]

Hereinafter, an ion analysis device according to the present invention will be described with reference to the drawings.

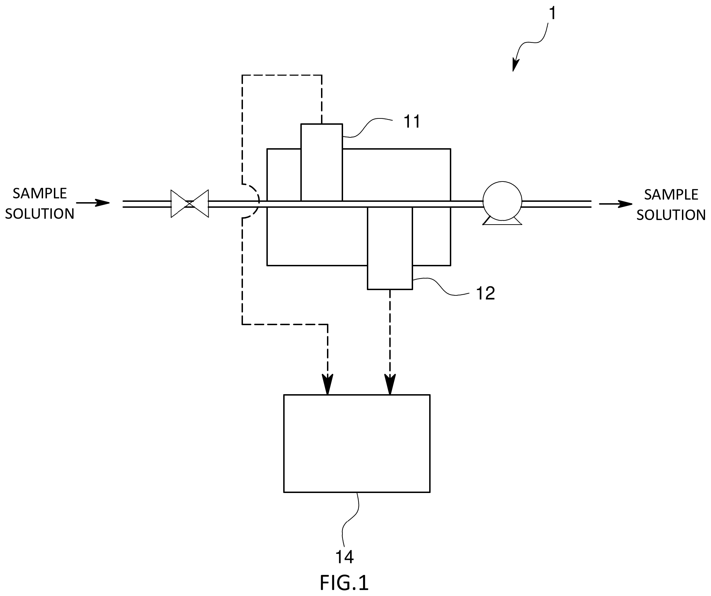

An ion analysis device 1 according to the present embodiment is able to measure an ion concentration in a sample solution S that is serving as a measurement target. The ion analysis device 1 in the present embodiment calculates a pH or the like based on what is known as a glass electrode method, and as shown in FIG. 1, is provided with a measurement electrode 11 equipped with a response glass 111, a reference electrode 12 equipped with a liquid junction 121, a measurement flow path 13 inside which the aforementioned response glass 111 and liquid junction 121 are disposed, and a calculation unit 14 that calculates an ion concentration in the sample solution based on a potential difference between the measurement electrode 11 and the reference electrode 12.

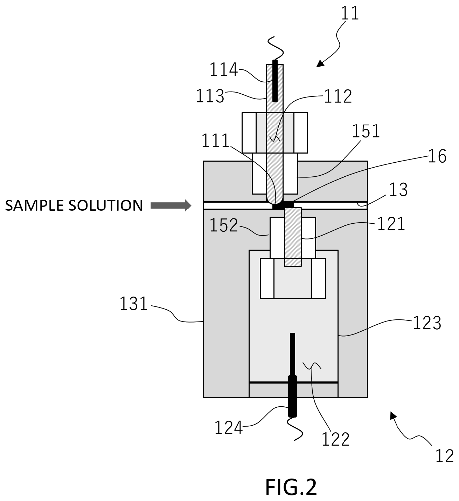

As is shown in FIG. 2, the measurement electrode 11 is equipped with a cylindrical first housing 113 inside which is stored a first internal liquid 112, a response glass 111 that is provided at a distal end portion of the first housing 113, and a first internal electrode 114 that is immersed in the first internal liquid 112.

The response glass 111 is interposed between the first internal liquid 112 and the sample solution S that is serving as the measurement target, and generates an electric potential based on a difference between the ion concentrations thereof. A commonly known response glass can be used as the response glass 111. In the present embodiment, the distal end portion of the first housing 113 is formed by attaching the response glass 111 to the distal end portion of the first housing 113.

The first internal liquid 112 is, for example, a phosphate buffer.

The first housing 113 is a circular cylinder-shaped object formed from a material such as, for example, glass, PVC (polyvinyl chloride), PP (polypropylene), PVDF (polyvinylidene fluoride), PTFE (polytetrafluoroethylene), PFA (perfluoroalkoxy alkane), and the like.

The first internal electrode 114 is a rod-shaped or elongated plate-shaped object formed, for example, from silver/silver chloride, and is attached so as to penetrate a wall surface of an end on the opposite side from the end that is formed by the response glass of the first housing 113. One end of the first internal electrode 114 is immersed in the first internal liquid 112, and a cable that is used to acquire a signal from the first internal electrode 114 is connected to another end thereof.

As is shown in FIG. 2, the reference electrode 12 is equipped with a cylindrical second housing 123 inside which is stored a second internal liquid 122, a second internal electrode 124 that is immersed in the second internal liquid 122 and outputs a reference potential, and a liquid junction 121.

It is sufficient if the liquid junction 121 is a component that is able to ensure conductivity between the second internal liquid 122 and the second internal electrode 124, however, in the present embodiment, as an example, a rod-shaped liquid junction 121 made of porous glass is used. One end of the liquid junction 121 is placed inside the second housing 123 and is immersed in the second internal liquid 122, while the other end thereof is fixed to the second housing 123 so as to protrude from the second housing 123 towards the measurement flow path 13.

The second internal liquid 122 is, for example, a 3.3M KCI aqueous solution.

The second housing 123 is a circular cylinder-shaped object formed from a material such as, for example, PVC (polyvinyl chloride), PP (polypropylene), PVDF (polyvinylidene fluoride), PTFE (polytetrafluoroethylene), PFA (perfluoroalkoxy alkane), and polyether ether ketone, and the like.

The second internal electrode 124 is a rod-shaped or elongated plate-shaped object formed, for example, from silver/silver chloride, and is attached so as to penetrate a wall surface of an end on the opposite side from the side where the liquid junction 121 of the second housing 123 is provided. One end of the second internal electrode 124 is immersed in the second internal liquid 122, and a cable that is used to acquire a reference potential from this second internal electrode 124 is connected to another end thereof.

The measurement flow path 13 is, for example, a capillary-shaped object having a substantially circular cross-sectional shape, and having an inner diameter of not less than 0.05 mm and not more than 10 mm, and preferably not less than 0.1 mm and not more than 5 mm, and more preferably not less than 0.5 mm and not more than 3 mm. In the present embodiment, the measurement flow path 13 is formed within a measurement flow path forming component 131 that is made from a resin such as polyether ether ketone, PVC (polyvinyl chloride), PP (polypropylene), PVDF (polyvinylidene fluoride), PTFE (polytetrafluoroethylene), PFA (perfluoroalkoxy alkane), PMMA (poly (methyl methacrylate)), PC (polycarbonate), PET (polyethylene terephthalate), or ceramics or the like which have excellent pressure resistance, chemical resistance, and heat resistance, and the measurement flow path 13 is formed so as to penetrate this measurement flow path forming component 131.

In the present embodiment, the ion analysis device 1 is additionally provided with a fixing mechanism 15 that fixes both the measurement electrode 11 and the reference electrode 12 to the measurement flow path forming component 131. The measurement electrode 11 and the reference electrode 12 are secured by the fixing mechanism 15 such that distal end portions of the response glass 111 and the liquid junction 121 each protrude slightly into the measurement flow path 13 so as to come into contact with the sample solution S in the measurement flow path 13, or so as to be positioned on the same plane as the inner wall of the measurement flow path 13.

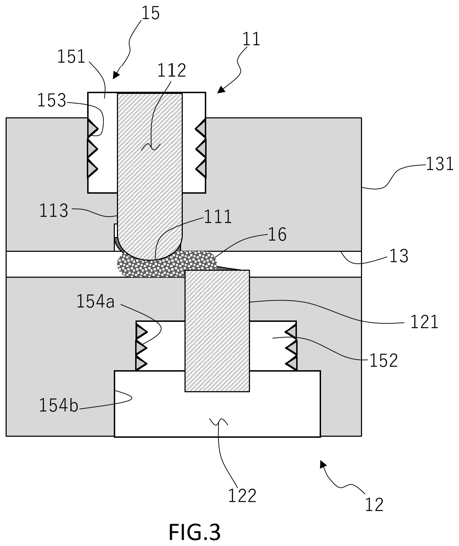

As is shown in FIG. 3, for example, the fixing mechanism 15 is provided with a first fixing component 151 that holds the measurement electrode 11 and fixes it to the measurement flow path forming component 131, a second fixing component 152 that holds the reference electrode 12 and fixes it to the measurement flow path forming component 131, a first engagement hole 153 that is formed in the measurement flow path forming component 131 and is used to fix the first fixing component 151 to an interior thereof, and a second engagement hole 154 that is formed in the measurement flow path forming component 131 and is used to fix the second fixing component 152 to an interior thereof.

The first fixing component 151 is, for example, a tube-shaped component having an inner circumferential surface that engages with a side circumferential surface of the first housing 113, and a side circumferential surface that is used to engage with the first engagement hole 153 via the side circumferential surface thereof. A screw thread is formed on the outer circumferential surface of the first fixing component 151.

The second fixing component 152 is, for example, a tube-shaped component having an inner circumferential surface that engages with a side circumferential surface of the rod-shaped component forming the liquid junction 121, and a side circumferential surface that is used to engage with the second engagement hole 154 via the side circumferential surface thereof. A screw thread is formed on the outer circumferential surface of the second fixing component 152.

The first engagement hole 153, for example, has a screw thread formed on an inner circumferential surface thereof that engages with the screw thread formed on the outer circumferential surface of the first fixing component 151. The first fixing component 151 is then secured by being screwed into this screw thread.

The second engagement hole 154 has, for example, a second fixing component holding portion 154a that internally holds the second fixing component 152 in an interior thereof, and a second housing holding portion 154b that internally holds the second housing 123 in an interior thereof, and a screw thread that engages with a screw thread formed on the outer circumferential surface of the second fixing component 152 is formed on the inner circumferential surface of the second fixing component holding portion 154a. Furthermore, the inner circumferential surface of the second housing holding portion 154b is formed extending along the outer diameter of the second housing 123 so that the outer circumferential surface of the second housing 123 can be held firmly without any looseness, and the reference electrode 12 can be fixed to the measurement flow path 13 by screwing the second fixing component 152 into a screw thread formed on the second fixing component holding portion 154a.

In the present embodiment, as is shown in FIG. 2 and FIG. 3, the response glass 111 and the liquid junction 121 are fixed to the measurement flow path 13 so as to face each other from either side of the measurement flow path 13.

The response glass 111 and the liquid junction 121 may be arranged so to face each other on either side of the measurement flow path 13, however, in order to further improve the measurement accuracy, it is preferable that the response glass 111 be disposed on the upstream side of the liquid junction 121.

The calculation unit 14 is an information processing circuit that is equipped with digital circuits including a CPU, memory, and communication ports and the like, analog circuits including a buffer and an amplifier and the like, and an AD converter and a DA converter and the like that provide an interface between these digital circuits and analog circuits. The information processing circuit is configured so as to function as a calculation unit as a result of the CPU and peripheral devices thereof operating in mutual cooperation in accordance with a predetermined program stored in the memory.

The ion analysis device 1 according to the present embodiment is further equipped with a hydrophilic portion 16 that is provided in such a way as to connect the response glass 111 to the liquid junction 121 within the measurement flow path 13.

The hydrophilic portion 16 is a hydrophilic component 161 that is placed within the measurement flow path 13 in the present embodiment and, as shown in FIG. 2 and FIG. 3, is positioned within the measurement flow path 13 so as to be in contact with both the response glass 111 and the liquid junction 121.

Provided that the hydrophilic component 161 has, for example, a hydrophilic surface then the material forming the hydrophilic component 161 is not particularly limited, however, in the present embodiment, as an example, an object formed from glass wool is used. It is preferable that a water contact angle of the surface of the hydrophilic material 161 be not more than 90°, and more preferably not more than 80°.

According to the ion analysis device 1 that is configured in the manner described above, because this ion analysis device 1 is equipped with the hydrophilic component 161 that is disposed within the measurement flow path 13 and is positioned so as to connect the response glass 111 to the liquid junction 121, even if the quantity of sample solution S flowing through the measurement flow path 13 is extremely small so that it is not possible to fill the space in the measurement flow path 13 between the response glass 111 and the liquid junction 121 with the sample solution S in a liquid-tight manner, it is still possible for the sample solution S that spreads along the surface of the hydrophilic member 161 to come into contact with (i.e., to make liquid-contact with) both the response glass 111 and the liquid junction 121.

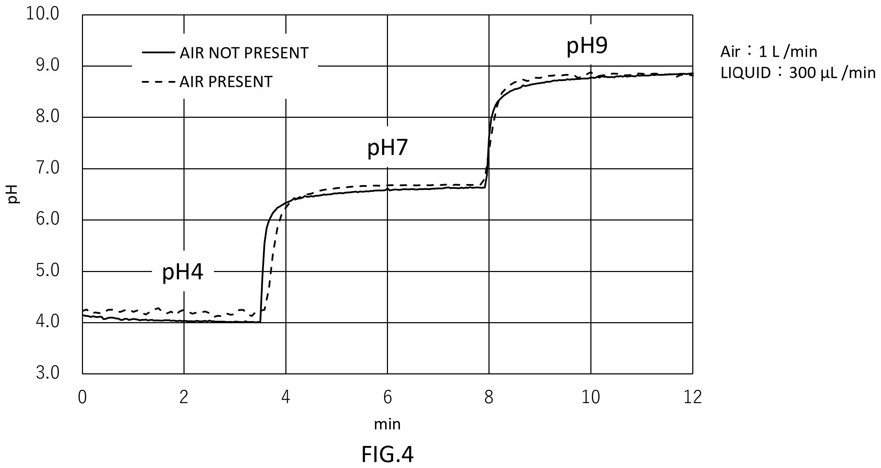

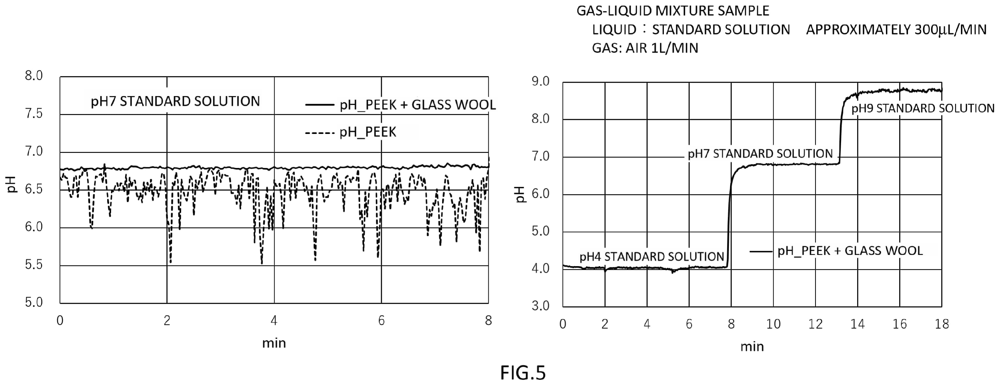

As a result, for example, even in a case in which a gas-liquid mixture sample is being analyzed such as a case in which, for example, the inner diameter of the measurement flow path 13 is 1 mm and the flow rate of the sample solution S flowing through the measurement flow path 13 is between 0.001 ml/min and 0.5 ml/min so that the liquid droplets are only just being supplied intermittently and at an extremely low flow rate, it is still possible for the ion concentration of the sample solution S to be accurately measured. The measurement data obtained when a gas-liquid mixture sample and a liquid-only sample were actually measured using the ion analysis device 1 according to the present embodiment in which the inner diameter of the measurement flow path 13 was 1 mm is shown in FIG. 4. As can be seen from FIG. 4, in the ion analysis device 1 according to the present embodiment, even in a case in which a gas-liquid mixture sample is being analyzed, stable measurements can be obtained at the same accuracy as from a sample in which only a liquid is being supplied and the quantity of this liquid is substantial. Moreover, FIG. 5 shows a comparison of the measurement results obtained from measuring a gas-liquid mixture sample using the ion analysis device 1 of the present embodiment that is equipped with the hydrophilic component 161 in the measurement flow path 13, and using a conventional ion analysis device that is not equipped with the hydrophilic component 161. It can be seen from FIG. 5 as well that, in the ion analysis device 1 of the present embodiment that is equipped with a hydrophilic portion, the indicated values remain stable with no fluctuations so that the ion concentration can be accurately measured.

Furthermore, according to the ion analysis device 1 of the present embodiment, because the response glass 111 and the liquid junction 121 are disposed so as to face each other across the measurement flow path 13, compared to a case in which the response glass 111 and the liquid junction 121 are arranged side by side, and the measurement electrode 11 and the comparison electrode 12 are arranged adjacent to each other, it is possible to shorten the distance between the response glass 111 and the liquid junction 121, thereby making it possible to handle cases in which there is only a small quantity of the sample solution.

Because the water contact angle of the surface of the hydrophilic component 161 is 90° or less, the sample solution S can be spread as thinly and as widely as possible on the surface of the hydrophilic material 161, thereby making it easier for the sample solution S to come into contact with both the response glass 111 and the liquid junction 121, and making it possible to handle cases in which even smaller quantities of the sample solution S are available.

Because the fixing mechanism 15 fixes the measurement electrode 11 and the reference electrode 12 to the measurement flow path 13 using screws, even in a case in which the pressure inside the measurement flow path 13 is high, the response glass 111 of the measurement electrode 11 and the liquid junction 121 of the reference electrode 12 can be stably secured to the measurement flow path 13.

The ion analysis device 1 of the present embodiment that is able to demonstrate the effects described above can be used for any application in which an ion concentration is to be measured, however, it is particularly favorable for use in an evaluation system 100 that evaluates a change in the state of the hydrogen reactor based on a change in the ion concentration contained in the gas discharged from a hydrogen reactor such as a fuel cell FC and the like.

In a fuel cell FC that generates energy by causing hydrogen and oxygen to react together, water is generated by this reaction of hydrogen and oxygen, however, it is known that in a case in which the components inside the FC battery deteriorate or the like, then the concentration of ions dissolved in this generated water changes. However, there are also cases in which the quantity of generated water that is discharged from fuel cell FC varies greatly depending on the operating conditions and on the size and the like of the fuel cell FC so that, in some cases, only a very small quantity of generated water is discharged. Even in cases such as these, because the state of the fuel cell FC changes moment by moment, in a case in which an attempt is being made to monitor the changes in the state of the fuel cell in real time, it is extremely advantageous to use an analysis device such as the ion analysis device 1 according to the present embodiment that is able to measure an ion concentration using as small a quantity of liquid as possible. Furthermore, according to the ion analysis device 1 of the present embodiment, it is possible not only to evaluate the entire fuel cell FC as a whole, but also, for example, to perform a one-by-one evaluation of each individual cell that makes up the fuel cell FC, or to evaluate small groups of cells such as two or three cells or the like.

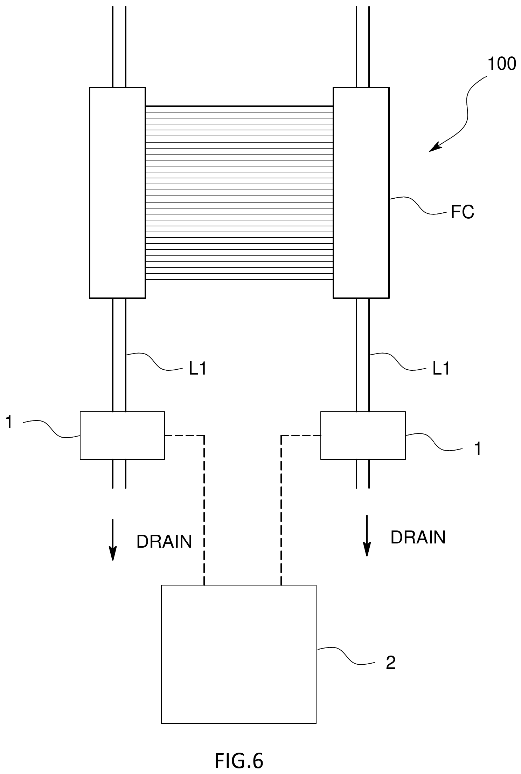

As is shown in FIG. 6, the above-described evaluation system 100 is provided, for example, with an emission gas flow path L1 through which gas discharged from the anode side and/or cathode side of the fuel cell FC circulates, an ion analysis device 1 that analyzes ions contained in the gas flowing through the emission gas flow path L1, and a determination unit 2 that evaluates the state of the fuel cell based on the analysis results obtained by the ion analysis device 1.

The emission gas flow path L1 is connected to the fuel cell FC and enables the gas discharged from the fuel cell FC to circulate through an interior thereof, and is formed by a tube or the like that is made from a material that is able to withstand the heat, pressure, and chemicals of the gas discharged from the fuel cell FC.

In the evaluation system 100 described in the present embodiment, the ion analysis device 1 is placed on the emission gas flow path L1. More specifically, the emission gas flow path L1 is connected to the measurement flow path via a connection port provided on the measurement flow path forming component of the above-described ion analysis device 1, and the ion analysis device 1 is configured so as to be able to measure the ion concentration contained in the generated water that is contained in the gas immediately after this gas has been discharged from the fuel cell FC.

The determination unit 2 determines the state of deterioration or the like of the fuel cell FC by, for example, comparing the concentrations of various ions, such as the pH values or the like output from the ion analysis device 1, with predetermined threshold values for each type of ion that has been set in advance in order to determine the state of the fuel cell FC.

The determination unit 2 is an information processing circuit that is equipped with digital circuits including a CPU, memory, and communication ports and the like, analog circuits including a buffer and an amplifier and the like, and an AD converter and a DA converter and the like that provide an interface between these digital circuits and analog circuits. The information processing circuit is configured so as to function as the determination unit 2 as a result of the CPU and peripheral devices thereof operating in mutual cooperation in accordance with a predetermined program stored in the memory. The information processing circuit responsible for performing the functions of the determination unit 2 may be the same as the information processing circuit responsible for performing the functions of the calculation unit described above, or may be a separate information processing circuit.

In addition to the structure described above, the evaluation system 100 may also include a condensation unit or the like (not shown in the drawings) that cools and condenses the sample solution S that has passed through the ion analysis device 1.

The present invention is not limited to the above-described embodiment.

For example, the hydrophilic portion 16 is not limited to having a structure provided with a hydrophilic component, and it is also possible for the hydrophilic portion 16 to be a hydrophilic surface layer that is formed on the inner surface of the measurement flow path.

This hydrophilic surface layer is formed, for example, within a range of the inner surface of the measurement flow path that includes a portion between the response glass and the liquid junction, and can be formed by employing a method such as performing surface treatment on the inner surface of the measurement flow path using a known surface treatment agent or the like. The water contact angle of the surface of the hydrophilic surface layer that comes into contact with the sample solution is preferably 90° or less, and more preferably 80° or less.

Note that the actual measurement flow path itself that is formed from a hydrophilic material may also perform the functions of the hydrophilic portion 16.

Alternatively, it is also possible for the functions of the hydrophilic portion 16 to be performed by the actual sample solution itself. More specifically, it is also possible to employ a system in which, by adding a surfactant or the like to the sample solution, the sample solution is able to spread across the inner surface of the measurement flow path and come into liquid contact with the response glass and the liquid junction.

The positional relationship between the measurement electrode 11 and the reference electrode 12 is not limited to that described above. It is preferable that the distance between the response glass 111 and the liquid junction 121 be as close as possible, however, it is also possible for the response glass 111 and the liquid junction 121 to be arranged side-by-side on the same side of the measurement device, or for the response glass 111 and the liquid junction 121 to not be positioned facing each other across the measurement flow path 13, but to instead be offset from each other at predetermined angles in the circumferential direction of the measurement flow path 13 (for example, at any angle exceeding 0° up to 180° such as 90° or 120° or the like).

The measurement electrode 11 and the reference electrode 12 described above are devices used to measure pH, however, the present invention is not limited to this. The ions serving as the measurement target may be changed as is appropriate depending on the type of fuel cell FC, however, one or more ions selected from a group including, for example, pH, fluorine ions, sodium ions, potassium ions, and the like may be measured. Note that, in the above-described embodiment, a configuration in which a measurement electrode equipped with a response glass is used is described, however, the present invention is not limited to this, and it is also possible to employ a configuration in which a measurement electrode equipped with a response portion that responds to ions, such as a response membrane that responds to ions, is used.

In the evaluation system 100 shown in FIG. 6, the ion analysis device is provided on both the anode side and/or the cathode side of the fuel cell FC, however, it is also acceptable for the ion analysis device to be provided on only one of these.

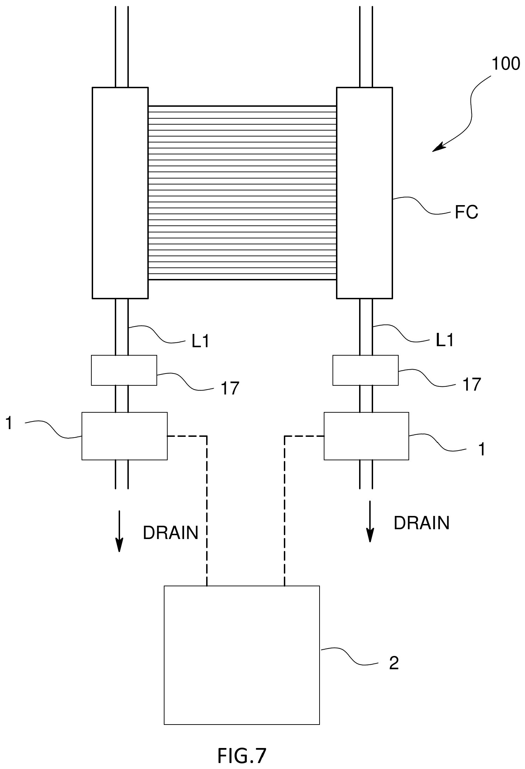

As is shown in FIG. 7, if the ion analysis device 1 or the evaluation system 100 is further equipped with a cooling unit 17 that cools the gas flowing in the emission gas flow path L1 on the upstream side of the response glass 111, then, if necessary, the quantity of the sample solution can be increased by liquefying the water vapor contained in the emission gas.

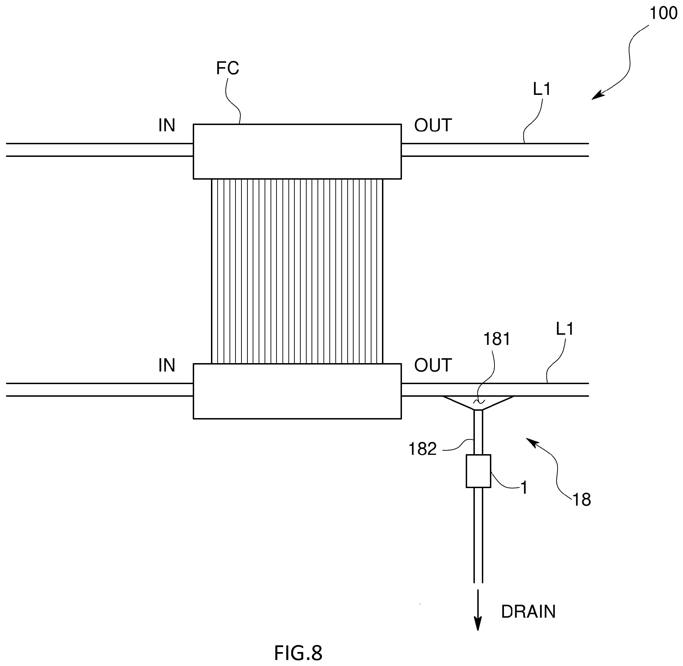

The ion analysis device 1 may be disposed on the emission gas flow path L1, however, as shown in FIG. 8, it may also be disposed outside the emission gas flow path L1.

In a case in which the ion analysis device 1 is installed outside the emission gas flow path L1, then either the ion analysis device 1 or the evaluation system 100 may be further provided with a sampling unit 18 that samples either a portion of, or all of, the generated liquid or condensed liquid from the emission gas flow path L1, and then supplies it to the interior of the measurement flow path 13 of the ion analysis device 1.

The sampling unit 18, for example, samples, as the sample solution, the generated water or condensed liquid collected in a first collection unit 181 that is formed on the emission gas flow path L1 on the anode side and/or cathode side of the fuel cell FC, and then supplies it to the measurement flow path 13 of the ion analysis device 1.

The sampling unit 18 may also be provided with an intake path 182 that connects the first collection unit 181 to the measurement flow path 13.

The intake path 182 is, for example, provided so as to branch off from the emission gas flow path L1, and is formed by a capillary-shaped pipe that connects a sampling port that is formed facing downwards from the lowest position on the tapered bottom surface of the first collection unit 181 to the measurement flow path 13 of the ion analysis device 1.

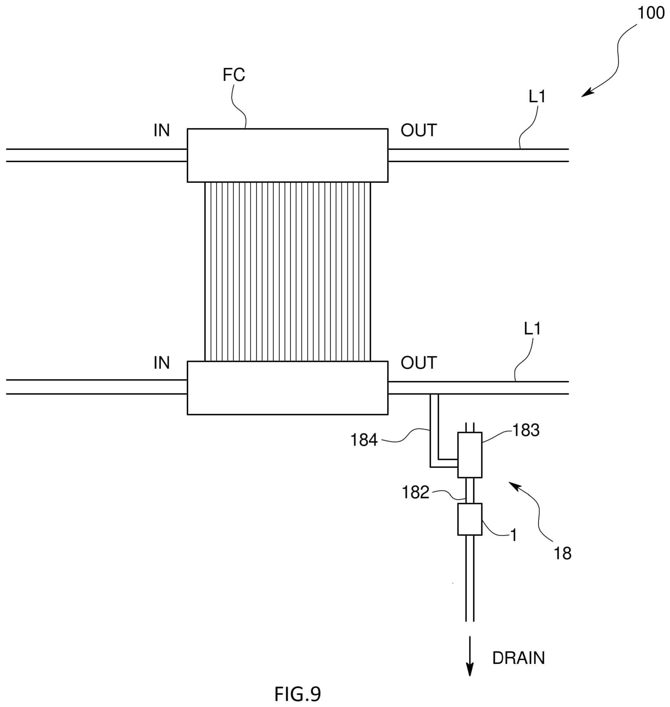

The sampling unit 18 is not limited to having the structure described above, and, as shown in FIG. 9, it is also possible to employ a structure in which either a portion of, or all of, the emission gas is sampled from the emission gas flow path L1, and the generated water or condensed liquid in the sampled emission gas is collected as a sample solution in a second collection unit 183, and the generated water or condensed liquid collected in the second collection unit 183 is introduced into the measurement flow path 13 of the ion analysis device 1 that is provided outside the emission gas flow path L1.

In this case, the sampling unit 18 is provided with a sampling flow path 184 that is provided so as to branch off from the emission gas flow path L1 through which the emission gas from the fuel cell FC flows, and connects the emission gas flow path L1 to the second collection unit 183. The second collection unit 183 may also be a gas-liquid separation unit that separates and removes air bubbles from the sample solution supplied to the measurement flow path 13 of the ion analysis device 1. In a case in which the sample solution is introduced from the second collection unit 183 into the measurement flow path 13, the intake path 182 is formed by a capillary-shaped pipe that connects the sampling port formed on the bottom surface of the second collection unit 183 to the measurement flow path 13 of the ion analysis device 1.

Furthermore, in a case in which the second collection unit 183 is a gas-liquid separation unit, there may also be provided a return path (not shown in the drawings) that connects an emission port that is provided in the gas-liquid separation unit to the emission gas flow path L1 on the downstream side from the connection portion where the emission gas flow path L1 is connected to the sampling flow path 184, and a return pump (not shown in the drawings) that feeds gas to the emission gas flow path L1 via this return path. This return pump may be controlled by a return gas control unit whose functions are performed by the above-described information processing circuit.

The sampling unit 18 is further provided with a liquid quantity detection means that detects the liquid quantity of the sample solution collected in the first collection unit 181 or the second collection unit 183, and with a liquid quantity control unit that controls the liquid quantity of the sample solution collected in the first collection unit 181 or the second collection unit 183 based on the liquid quantity of the sample solution detected by the liquid quantity detection device.

An example of this liquid quantity detection means is, for example, a general-purpose liquid quantity sensor that is placed inside the first collection unit 181 or the second collection unit 183.

The liquid quantity control unit may be provided, for example, with a pump that is placed on a discharge path through which the sample solution, after undergoing analysis on the intake path 182 or the ion analysis device 1, flows, and with a sampling control unit that controls an operation of this pump. It is preferable that the sampling control unit operate the pump either continuously or intermittently so that the flow rate of the sample solution flowing through the intake path 182 is, for example, between 0.01 ml/min and 0.5 ml/min. The functions of this sampling control unit may be performed, for example, by the above-described information processing circuit.

The ion analysis device 1 or the evaluation system 100 may be further provided with heat-retaining component that maintains the temperature of the sample solution S flowing on the upstream side of the response glass 111 of the emission gas flow path L1 or through the intake path 182 of the sampling unit 18. This heat-retaining component is used to maintain the temperature of the generated water, which is the sample solution flowing through the intake path 182, so that this temperature does not vary too greatly from the temperature within the first collection unit 181, and so as to thereby inhibit the conversion of water vapor contained in the emission gas into liquid water.

The evaluation system 100 may be further provided with, for example, a hydrogen consumption quantity measurement device that measures a quantity of hydrogen consumed in the fuel cell FC, and a hydrogen leakage measurement device that measures a quantity of hydrogen leakage from the fuel cell FC. The evaluation system 100 may also be provided with a control unit that controls operations of each of these various measurement and analysis devices, a storage unit that stores measurement data output from these various measurement and analysis devices, and an alert issuing unit that issues an alert in a case in which, based on the measurement data, the determination unit 2 determines that an abnormality has occurred in the fuel cell FC.

In this case, it is also possible for the determination unit 2 to evaluate the fuel cell FC by determining the operating state and the state of deterioration of the fuel cell FC using not only information from the ion analysis device 1, but by combining this information with information from the hydrogen consumption quantity measurement device and the hydrogen leakage measurement device and the like.

In the above-described embodiment, the ion analysis device is used to analyze waste liquid from a fuel cell, however, in addition to a fuel cell, it may also be used to analyze waste liquid from other test specimens that discharge small amounts of liquid along with gas, such as, for example, a water electrolysis cell, a co-electrolytic catalyst, a methanation catalyst, an emission gas purification catalyst, or an oxidation catalyst. Moreover, in the above-described embodiment, the evaluation system is an evaluation system that evaluates a fuel cell, however, the test specimens evaluated by the evaluation system may include, in addition to a fuel cell, test specimens from which small amounts of liquid are discharged along with gas, such as, for example, a water electrolysis cell, a co-electrolytic catalyst, a methanation catalyst, an emission gas purification catalyst, or an oxidation catalyst.

More specifically, water is generated from emission gas via an emission gas purification catalyst. Alternatively, water is generated from a reaction between carbon dioxide and hydrogen via a methanation catalyst (i.e., via a methanation reaction). Alternatively, water is generated from a reaction between ammonia and oxygen via an oxidation catalyst (i.e., via an ammonia reaction). Because only a small quantity of water is generated in these reactions, for example, by providing the above-described liquid quantity control unit with a diluent introduction unit that introduces a diluent into the generated water, and using this diluent introduction unit to introduce the diluent into the generated water, then even if only a small quantity of water is generated from these test specimens, it is still possible for the component concentration thereof to be accurately measured.

In the above-described embodiment, the ion analysis device analyzes waste liquid from a single fuel cell or a small number of fuel cells, however, the present invention is not limited to being applied to a single fuel cell or a small number of fuel cells, and may also be used to analyze waste liquid from a large number of fuel cells.

In the above-described embodiment, hydrogen gas and oxidant gas are supplied to the fuel cell, however, in a case in which a test specimen that is different from a fuel cell is being evaluated, the test specimen may be supplied with a gas other than hydrogen gas or oxidant gas. More specifically, in a case in which the test specimen is an emission gas purification catalyst, then it is also possible for emission gas to be supplied to the test specimen. Alternatively, in a case in which the test specimen is a methanation catalyst, then carbon dioxide and hydrogen may be supplied to the test specimen. Furthermore, in a case in which the test specimen is an oxidation catalyst, then ammonia and oxygen may be supplied to the test specimen.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as limited by the foregoing description and is only limited by the scope of the appended claims.

### [Industrial Applicability]

According to the present invention, it is possible to measure an ion concentration contained in a sample solution even in a case in which an even smaller quantity of sample solution is supplied compared to the conventional technology. As a result, it is possible to analyze changes in an ion concentration in a sample solution in real time and more responsively than when taking a measurement after having first accumulated the sample solution. Moreover, because it is not necessary to dilute the sample solution, it is possible to measure the ion concentration in the sample solution accurately using the simplest possible configuration.

### [Description of the Reference Numerals]

- 1: Ion Analysis Device
- 11: Measurement Electrode
- 111: Response Glass (Response portion)
- 12: Reference Electrode
- 121: Liquid Junction
- 13: Measurement Flow Path
- 14: Calculation Unit
- 15: Fixing Mechanism
- 16: Hydrophilic Portion
- 17: Cooling Unit

## Claims

1. An ion analysis device comprising:
a measurement electrode that is provided with a response portion that responds to ions;
a reference electrode that is provided with a liquid junction; and
a measurement flow path in the interior of which are disposed the response portion and the liquid junction, wherein
a hydrophilic portion that connects the response portion to the liquid junction is further provided inside the measurement flow path.

2. The ion analysis device according to Claim 1, wherein the response portion and the liquid junction are arranged facing each other on either side of the measurement flow path.

3. The ion analysis device according to Claim 1 or Claim 2, wherein the response portion and the liquid junction are arranged facing each other on either side of the measurement flow path, and in such a way that the liquid junction is positioned on the downstream side of the response portion.

4. The ion analysis device according to any one of Claims 1 through 3, wherein a contact angle of a surface of the hydrophilic portion that is in contact with the sample solution is 90° or less.

5. The ion analysis device according to any one of Claims 1 through 4, wherein the hydrophilic portion is a hydrophilic surface layer that is provided on an internal wall of the measurement flow path, or a hydrophilic component that is disposed inside the measurement flow path.

6. The ion analysis device according to any one of Claims 1 through 5, wherein the hydrophilic portion is a hydrophilic component that is disposed inside the measurement flow path, and
the hydrophilic component is in contact with both the response portion and the liquid junction.

7. The ion analysis device according to any one of Claims 1 through 6, wherein there is further provided a fixing mechanism that fixes the measurement electrode and/or the reference electrode onto the measurement flow path by means of a screw.

8. The ion analysis device according to any one of Claims 1 through 7, wherein there is further provided a calculation unit that calculates an ion concentration in a sample solution based on a potential difference between the measurement electrode and the reference electrode.

9. An evaluation system that analyzes ions contained in emission gas discharged from a test specimen comprising
the ion analysis device according to any one of Claims 1 through 8.

10. The evaluation system according to Claim 9, wherein a cooling unit that cools the sample solution flowing through the ion analysis device is further provided at a location upstream from the ion analysis device.

11. An ion analysis method in which ions contained in a sample solution flowing through a measurement flow path are analyzed using a measurement electrode that is equipped with a response portion that responds to ions, and a reference electrode that is equipped with a liquid junction, and in which
the response portion and the liquid junction are electrically connected together by providing a hydrophilic portion that connects the response portion and the liquid junction within the measurement flow path.

12. An evaluation method in which ions contained in emission gas emitted from a test specimen are analyzed, and in which ions contained in the emission gas flowing through a measurement flow path are analyzed using a measurement electrode that is equipped with a response portion that responds to ions, and a reference electrode that is equipped with a liquid junction, and in which
the response portion and the liquid junction are electrically connected together by providing a hydrophilic portion that connects the response portion and the liquid junction within the measurement flow path.
